# EUROPÄISCHE PATENTANMELDUNG

(11) **EP 3 398 671 A1**
(43) Veröffentlichungstag der Anmeldung: **07.11.2018**
(21) Anmeldenummer: 18167579.4
(22) Anmeldetag: 16.04.2018
(51) Int. Cl.: B01D 21/24, B01D 21/26, D21D 5/24

(54) **VORRICHTUNG ZUR TRENNUNG VON FESTTEILCHEN AUS SUSPENSIONEN**

(30) Priorität: 05.05.2017 DE 102017109683
(71) Anmelder: BVG Bauer Verfahrenstechnik GmbH, 89626 Greifenberg (DE)
(72) Erfinder: Pllana, Shemsi, 86836 Lagerlechfeld (DE)
(74) Vertreter: Wittmann, Ernst-Ulrich

(57) **Zusammenfassung**

Die vorliegende Erfindung betrifft eine Vorrichtung (10) zur Trennung von Festteilchen aus einer Suspension oder Lösung, insbesondere zur Trennung von Asche aus einer viskosen Lösung, welch aufweist: eine erste Kammer (100), mit einem zylindrischen Bereich (110), einem konischen Bereich (120) und einem Innenmantel (140), wobei der zylindrische Bereich (110) den oberen Teil der ersten Kammer (100) bildet und eine Innenwand (111) mit einem Einlass (104) aufweist, der konische Bereich (120) sich nach unten verjüngt und den unteren Teil der ersten Kammer (100) bildet, eine Innenwand (121) und einen Boden (128) mit einem ersten Auslass (106) aufweist und direkt an den zylindrischen Bereich (110) anschließend angeordnet ist, der Innenmantel (140) eine zylindrische Form hat und konzentrisch innerhalb der ersten Kammer (100), vorzugsweise im Bereich des zylindrischen Bereichs (110), angeordnet ist und eine Außenwand (146) und einen offenen Boden (148) aufweist, und innerhalb des Innenmantels (140) ein zweiter Auslass (108) angeordnet ist. Die Erfindung ist dadurch gekennzeichnet, dass der Einlass (104) an der Innenwand (111) des zylindrischen Bereichs (110) im Wesentlichen tangential zu dem Innenmantel (140) angeordnet ist und geeignet ist, durch Einleiten der Suspension oder Lösung eine Strömung im Bereich zwischen der Innenwand (111) des zylindrischen Bereichs (110) und der Außenwand (146) des Innenmantels (140) in derArt zu erzeugen, dass die Festteilchen aus der Suspension durch die Zentrifugalkraft der Strömung an die Innenwand (111) des zylindrischen Bereichs (110) und die Innenwand (121) des konischen Bereichs (120) gefördert werden und durch Sedimentation zum Boden (128) des konischen Bereichs (120) gelangen und über den ersten Auslass (106) ableitbar sind und die von den Festteilchen gereinigte Suspension durch den offenen Boden (148) des Innenmantels (140) über den Innenraum des Innenmantels (140) und den zweiten Auslass (108) ableitbar ist.

## Beschreibung

Die vorliegende Erfindung betrifft eine Vorrichtung zur Trennung von Festteilchen aus einer Suspension oder Lösung, insbesondere zur Trennung von Asche aus einer viskosen Lösung oder einer kolloidalen Lösung, wie sie beispielsweise bei Papiermaschinen zum Auftrag der Stärkeflotte oder der Streichfarbe auf bestimmten Papieren Verwendung finden. Diese Suspensionen können verunreinigt sein, z.B. durch Fasern, Pigmente, Stickies, Chemikalienagglomerate und/oder durch Sand. Die Stärkeflotte ist also ein 2-Phasensystem, nämlich eine kolloidale Lösung und Suspension mit ungelösten Teilchen, wie z.B. die genannten Verunreinigungen. Um Nachteile für die Papierqualität und/oder die Papiermaschinen zu vermeiden, ist es erforderlich, die Stärkeflotte oder die Streichfarbe zu filtrieren.

Vorrichtungen zur Trennung von Festteilchen aus Suspensionen sind im Stand der Technik bekannt. Beispielsweise bei Papiermaschinen werden derartige Suspensionen in einem Kreislauf verwendet. So wird, um eine Leim- oder Filmpresse zu versorgen, die aufzutragende Suspension Überschuss gefördert. Üblicherweise wird dabei die drei- bis zehnfache Menge der Suspension - im Vergleich zur benötigten Mange - auf das Papier aufgetragen. Die überschüssige Menge wird wieder in den Kreislauf eingespeist. Dabei werden im Vorlauf häufig Druckfilter verwendet, die verhindern, dass Verunreinigungen auf das Auftragsaggregat gelangen. Im Rücklauf werden häufig Vibrationssiebe oder ebenfalls Druckfilter verwendet.

Diese Vorrichtungen weisen unter anderem folgende Nachteile auf: Die genannten Siebe und Filter können nur Verunreinigungen zurückhalten, die größer als etwa 80 µm sind. Kleinere Festteilchen, wie z.B. Sand, können von den bislang eingesetzten Filtern nicht zurückgehalten werden und reduzieren so die Papierqualität und/oder beschädigen die Papiermaschinen durch erhöhten Verschleiß. Werden feinere Filter verwendet, so verstopfen diese sehr schnell. Dadurch wird ein kontinuierlicher Produktionsprozess erheblich beeinträchtigt.

Ausgehend von diesem Stand der Technik ist es Aufgabe der vorliegenden Erfindung, die Nachteile des Stands der Technik wenigstens teilweise zu überwinden bzw. zu verbessern.

Die Aufgabe wird durch eine Vorrichtung gemäß Anspruch 1 gelöst. Bevorzugte Ausführungsformen und Abwandlungen sind Gegenstand der Unteransprüche.

Eine erfindungsgemäße Vorrichtung zur Trennung von Festteilchen aus einer Suspension oder Lösung, insbesondere zur Trennung von Asche aus einer viskosen Lösung, weist auf:
Eine erste Kammer, mit einem zylindrischen Bereich, einem konischen Bereich und einem Innenmantel. Dabei bildet der zylindrische Bereich den oberen Teil der ersten Kammer und weist eine Innenwand mit einem Einlass auf. Der konische Bereich verjüngt sich nach unten und bildet den unteren Teil der ersten Kammer, er weist eine Innenwand und einen Boden mit einem ersten Auslass auf und ist direkt an den zylindrischen Bereich anschließend angeordnet. Der Innenmantel hat eine zylindrische Form und ist konzentrisch innerhalb der ersten Kammer, vorzugsweise im Bereich des zylindrischen Bereichs, angeordnet und weist eine Außenwand und einen offenen Boden auf. Weiterhin ist innerhalb des Innenmantels ein zweiter Auslass angeordnet.

Die erfindungsgemäße Vorrichtung ist dadurch gekennzeichnet, dass der Einlass an der Innenwand des zylindrischen Bereichs im Wesentlichen tangential zu dem Innenmantel angeordnet ist und geeignet ist, durch Einleiten der Suspension oder Lösung eine Strömung im Bereich zwischen der Innenwand des zylindrischen Bereichs und der Außenwand des Innenmantels in der Art zu erzeugen, dass die Festteilchen aus der Suspension durch die Zentrifugalkraft der Strömung an die Innenwand des zylindrischen Bereichs und die Innenwand des konischen Bereichs gefördert werden und durch Sedimentation zum Boden des konischen Bereichs gelangen und über den ersten Auslass ableitbar sind und die von den Festteilchen gereinigte Suspension durch den offenen Boden des Innenmantels über den Innenraum des Innenmantels und den zweiten Auslass ableitbar ist.

Dabei werden unter Festteilchen Verunreinigungen verstanden, die sich in der Suspension befinden und die in der Regel bereits einen oder mehrere Vorfilter - z.B. ein Vibrationssieb oder Druckfilter - passiert haben und weisen daher einen Durchmesser auf, den diese Vorfilter nicht mehr zurückhalten. Ein typischer Wert hierfür ist etwa 80 µm. Diese Festteilchen können beispielsweise Fasern, Pigmente, Stickies, Chemikalienagglomerate, mineralische Partikel, z.B. Kalziumkarbonat und andere Feststoffe, und/oder Sand sein. Insbesondere handelt es sich bei den Festteilchen um Verunreinigungen der Stärkeflotte oder der Streichfarbe, die beim Auftrag auf ein Papier nicht benötigt werden und/oder die dabei schädlich sind. In der Papierindustrie werden diese Festteilchen auch Asche bzw. Sand genannt. Insbesondere Sand hat erhebliche negative Auswirkungen auf den Produktionsprozess und die Herstellung von Papier: So verringert Sand die Papierfestigkeit; Sand ist abrasiv und führt zu zusätzlichem Verschleiß von Pumpen, Dosieraggregaten (wie z.B. Rakel) und Walzenbezügen; Sand führt zu einem streifigen Profil auf den Auftragswalzen der Leim- und Filmpressen und damit zu streifigem Papier. Daher ist es insbesondere bei der Papierproduktion wichtig, Sand aus den Maschinenkreisläufen so weit als möglich zu eliminieren. Mit einer Filtration gemäß dem Stand der Technik ist das nicht möglich.

In einigen Ausführungsformen ist der gereinigte Rest der Suspension oder Lösung, d.h. die Suspension oder Lösung, die keine Festteilchen enthält, hochviskos und hat einen geringen Anteil an Wasser. In einigen Ausführungsformen hängt die Viskosität der Suspension von der Temperatur ab. In einigen Ausführungsformen liegt die Viskosität in einem Bereich zwischen 10 und 2000 mPs, vorzugsweise zwischen 100 und 1000 mPs und besonders bevorzugt zwischen 250 und 750 mPs, gemessen mit dem Brookfield Viskosimeter bei 50 °C.

Die Suspension oder Lösung, welche durch eine erfindungsgemäße Vorrichtung getrennt bzw. gereinigt wird, besteht also auch einer hochviskosen Flüssigkeit und darin fein verteilten Festteilchen, hier insbesondere aus Verunreinigungen. Die Begriffe Suspension und Lösung werden im Folgenden synonym verwendet.

Die Suspension wird über den der Einlass in den Bereich zwischen der Innenwand des zylindrischen Bereichs und der Außenwand des Innenmantels eingeleitet. Dabei ist der Einlass so gestaltet, dass er sich an der Innenwand des zylindrischen Bereichs befindet und im Wesentlichen tangential zu dem Innenmantel angeordnet ist. Dabei bewirkt die im Wesentlichen tangentiale Anordnung des Einlasses in Bezug zu dem Innenmantel, dass durch die eingeströmte Suspension eine Strömung mit hohen laminaren Anteilen in einem Ringbereich zwischen der Innenwand des zylindrischen Bereichs und der Außenwand des Innenmantels erzeugt wird. Daher kann eine optimale Anordnung des Einlasses in einer erfindungsgemäßen Ausführungsform von einer rein tangentialen Anordnung abweichen. Diese Strömung erfasst den genannten Ringbereich und auch, zumindest teilweise, den konischen Bereich. Diese Strömung bewirkt, dass die Festteilchen aus der Suspension durch die Zentrifugalkraft der Strömung an die Innenwand des zylindrischen Bereichs und die Innenwand des konischen Bereichs gefördert werden. Die Festteilchen gelangen dann, durch Sedimentation, weiter zum Boden des konischen Bereichs. Die Sedimentation erfolgt dabei im Wesentlichen gemäß dem Gesetz von Stokes. Am Boden des konischen Bereichs ist der erste Auslass angeordnet. Über diesen ersten Auslass sind die Festteilchen dann ableitbar. Die Trennung der Festteilchen basiert also auf der Verwendung der Prinzipien Zentrifugalkraft und Sedimentation.

Die von den Festteilchen gereinigte Suspension nimmt einen anderen Weg: Diese gelangt durch den offenen Boden des Innenmantels in den Innenraum des Innenmantels. Von diesem Innenraum des Innenmantels kann die gereinigte Suspension dann über den zweiten Auslass abgeleitet werden. In einer Ausführungsform kann der zweite Auslass an der Innenwand des Innenmantels angeordnet sein. In einer Ausführungsform kann der zweite Auslass in dem Innenraum des Innenmantels angeordnet sein, beispielsweise als ein Rohr, das z.B. seitlich oder nach oben oder nach unten offen ist. Das Rohr kann nach oben, d.h. durch eine obere Öffnung des Innenmantels und/oder einen Überlaufstutzen, der als Rohr über die Oberkante der Kammer geführt ist, oder auch durch eine Passage durch den Innenmantel oder durch den Boden des Innenmantels weggeführt werden. Das Ziel der Anordnung ist, möglichst wenig Teilchen durch die Ableitung mitzunehmen.

Die erfindungsgemäße Vorrichtung weist daher mindestens folgende Vorteile auf: In der Suspension, z.B. in der Stärkeflotte, lassen sich, wie Experimente gezeigt haben, Festteilchen wie Sand und andere Stoffe in hohem Maße, z.B. zu über 70 %, aus der Suspension trennen. Dadurch wird die Abrasion innerhalb der Maschinen deutlich reduziert; auf diese Weise werden Anlagenteile in dem Pfad, den die Suspension in der Maschine nimmt, geschützt. Das führt zu wesentlich längeren Standzeiten der eingesetzten Materialien. Insbesondere wird bei Papiermaschinen die Qualität der hergestellten Papiere verbessert.

In einigen Ausführungsformen ist der Einlass im oberen Drittel, vorzugsweise im oberen Viertel, des zylindrischen Bereichs angeordnet. Auf diese Weise ergibt sich ein besonders langer Weg für die Strömung und ermöglicht so die Abscheidung der Festteilchen über eine recht lange Strecke.

In einigen Ausführungsformen ist der erste Auslass im oberen Drittel, vorzugsweise im oberen Viertel, des zylindrischen Bereichs angeordnet. Dies ermöglicht einen größeren Abstand von den nach unten fallenden Festteilchen.

In einigen Ausführungsformen weist die Vorrichtung weiterhin eine zweite Kammer auf, welche konisch gestaltet ist und sich nach oben verjüngt und an der Öffnung im Boden des Innenmantels angeordnet ist.

Die Anordnung der zweiten Kammer an der Öffnung im Boden des Innenmantels beeinflusst die Strömung, so dass der Innenbereich des Innenmantels eine geringere Strömung aufweist und so zu weniger Verwirbelungen führt, so dass weniger Festteilchen wieder nach oben, d.h. in den Innenbereich des Innenmantels, gewirbelt werden und auf diese Weise die Trennung weiter verbessern.

In einigen Ausführungsformen weist die die erste Kammer weiterhin einen Dampfeinlass zum Erwärmen der Suspension auf.

Durch den eingeleiteten Dampf kann die Suspension erhitzt werden. Dies ist vorteilhaft, weil bei vielen Suspensionen die Viskosität von der Temperatur abhängt. Durch das Einführen von Dampf, d.h. Wasserdampf oder ein anderes erhitztes Fluid, kann die Eigenschaft der Suspension in günstiger Weise verändert werden, insbesondere - je nach Bedarf - die die Viskosität der Suspension verringert oder gesteigert werden. Das eingeleitete Fluid kann bei Bedarf auch zum Abkühlen der Suspension eingesetzt werden.

Ein weiterer Vorteil ergibt sich daraus, dass bei diesen Ausführungsformen die Temperaturregelung der Flotte in die erfindungsgemäße Vorrichtung integriert ist und dadurch weniger externe Bauteile benötigt und die Wartung verbessert.

In einigen Ausführungsformen weist die erste Kammer weiterhin einen Stärkeeinlass auf.

Dies führt zu einer weiteren Integration bei einer erfindungsgemäßen Vorrichtung. Der Praktiker weiß, dass dies zu einer erheblichen Reduktion des Platzbedarfs und zu einer weiteren Verbesserung der Wartung führt.

In einigen Ausführungsformen weist der zylindrische Bereich der ersten Kammer einen Durchmesser zwischen 100 cm und 500 cm, bevorzugt zwischen 140 cm und 200 cm auf, der Innenmantel weist einen Durchmesser zwischen 50% und 90%, bevorzugt zwischen 70% und 80%, der ersten Kammer auf, und der konische Bereich der ersten Kammer weist einen unteren Durchmesserzwischen 10 cm und 50 cm, bevorzugt zwischen 14 cm und 20 cm, auf.

In einigen Ausführungsformen weist der zylindrische Bereich der ersten Kammer eine Höhe zwischen 50 % und 80 %, bevorzugt zwischen 60 % und 70 %, seines Durchmessers und der Innenmantel eine Höhe zwischen 50% und 90 %, bevorzugt zwischen 70% und 80%, der Höhe des zylindrischen Bereichs auf.

Diese Abmessungen haben sich insbesondere bei der Verwendung für Papiermaschinen als besonders vorteilhaft erwiesen, weil sie eine sinnvolle Balance darstellen zwischen dem erforderlichen (z.B. für die Durchlaufzeit zur Trennung erforderlichen) Größe der Vorrichtung und der Handhabbarkeit für die Steuerung, insbesondere der Temperatur der Suspension.

Dabei ist der Boden des Innenmantels im Wesentlichen auf der Höhe des Übergangs zwischen dem zylindrischen Bereich und dem konischen Bereich der ersten Kammer angeordnet, und der konische Bereich hat eine Höhe zwischen 10% und 100 %, bevorzugt zwischen 20% und 60%, der Höhe des zylindrischen Bereichs.

Bei diesen Abmessungen wird im konischen Bereich relativ wenig Verwirbelung erzeugt, so dass mehrvon den Festteilchen nach unten sickern oderfallen können.

In einigen Ausführungsformen ist in Strömungsrichtung vordem Einlass und/oder nach dem ersten Auslass eine Pumpe angeordnet.

Am Einlass wird die Strömung eingespeist, die zur erfindungsgemäßen Trennung der Festteilchen aus Suspensionen erforderlich ist. Diese Strömung kann beispielsweise durch hydrostatischen Druck erzeugt werden, wenn z.B. die Suspension über ein längeres, im Wesentlichen nach oben gerichtetes Rohr zugeführt wird. Alternativ oder zusätzlich kann in Strömungsrichtung vor dem Einlass eine Pumpe angeordnet sein, um die Zentrifugalwirkung weiterzu verstärken.

Weiterhin kann in Strömungsrichtung nach dem ersten Auslass eine Pumpe angeordnet sein.

In einigen Ausführungsformen weist die Strömung eine Geschwindigkeit zwischen 5 km/h und 100 km/h, bevorzugt zwischen 30 km/h und 70 km/h, besonders bevorzugt von 50 km/h, auf.

Dies hat sich bei Experimenten als der am besten geeignete Geschwindigkeitsbereich zur Trennung von Festteilchen aus einer Suspension oder Lösung herausgestellt, insbesondere zurTrennung von Asche aus einer viskosen Lösung, wie sie beispielsweise bei Papiermaschinen zum Auftrag der Stärkeflotte oder der Streichfarbe auf bestimmten Papieren Verwendung finden. Für andere Anforderungsprofile können andere Geschwindigkeitsbereiche bevorzugt sein.

In einigen Ausführungsformen weist die Vorrichtung weiterhin eine, vorzugsweise zylindrische, dritte Kammer auf, welche direkt an den Boden des konischen Bereichs anschließend angeordnet ist. Dabei ist die dritte Kammervon der ersten Kammer durch ein erstes Ventil getrennt, und die dritte Kammer weist am Boden ein zweites Ventil auf.

Diese dritte Kammer wird auch Rejektkammer genannt und dient zum Ausschleusen der Festteilchen. Das erste und das zweite Ventil ist vorzugsweise als Absperrschieber ausgebildet. Wenn die Rejektkammer geleert werden soll, wird das erste Ventil geschlossen und das zweite Ventil geöffnet, so dass die Festteilchen abgelassen werden können.

In einigen Ausführungsformen besteht die Möglichkeit, die Rejektkammer zu spülen. Dies wird durch einen zusätzlichen Einlass, z.B. für Spülwasser, in der Rejektkammer realisiert. Dieser Einlass wird beim oder nach dem Ablassen der Festteilchen geöffnet.

In einigen Ausführungsformen ist die Rejektkammer in einem unteren Bereich konisch ausgeführt. Dieser untere Bereich kann etwa 10 % bis 30 % der Länge der Rejektkammer einnehmen. Diese Ausführungsform hat den Vorteil, dass die Spülung zu einer besseren Reinigung der Rejektkammer führt und weniger Festteilchen dort verbleiben.

In einigen Ausführungsformen weisen die Festteilchen eine Größe von kleiner 80 µm, bevorzugt zwischen größer 80 µm und 8 µm, besonders bevorzugt zwischen 50 µm und 5 µm, und ein spezifisches Gewicht von größer 1,1 kg/dm³, bevorzugt zwischen 1,2 kg/dm³ und 5,0 kg/dm³, besonders bevorzugt zwischen 2,0 kg/dm³ und 2,5 kg/dm³, auf.

Diese Ausführungsformen sind insbesondere für die Verwendung im Herstellungsprozess bei Papiermaschinen ausgelegt. Dabei ist es insbesondere wichtig, dass der Anteil an Sand in der Stärkeflotte oder der Streichfarbe signifikant reduziert wird.

In einigen Ausführungsformen weist die Vorrichtung weiterhin einen Rüttler zur stoßweisen vertikalen Bewegung der ersten Kammer aufweist.

Damit kann das "Herunterfallen" der Festteilchen weiter verbessert werden.

Die Erfindung wird nachfolgend anhand verschiedener Ausführungsformen erläutert, wobei darauf hingewiesen wird, dass durch diese Beispiele Abwandlungen beziehungsweise Ergänzungen, wie sie sich für den Fachmann unmittelbar ergeben, mit umfasst sind. Darüber hinaus stellen diese bevorzugten Ausführungsbeispiele keine Beschränkung der Erfindung in der Art dar, dass Abwandlungen und Ergänzungen im Umfang der vorliegenden Erfindung liegen.

Dabei zeigen:
**Fig.1****:** Einen senkrechten Schnitt durch eine erfindungsgemäße Ausführungsform;
**Fig. 2****:** einen waagerechten Schnitt durch die erfindungsgemäße Ausführungsform nach Figur 1.

Dabei bezeichnen dieselben Bezugszeichen in allen Figuren dieselben Teile der Vorrichtung.

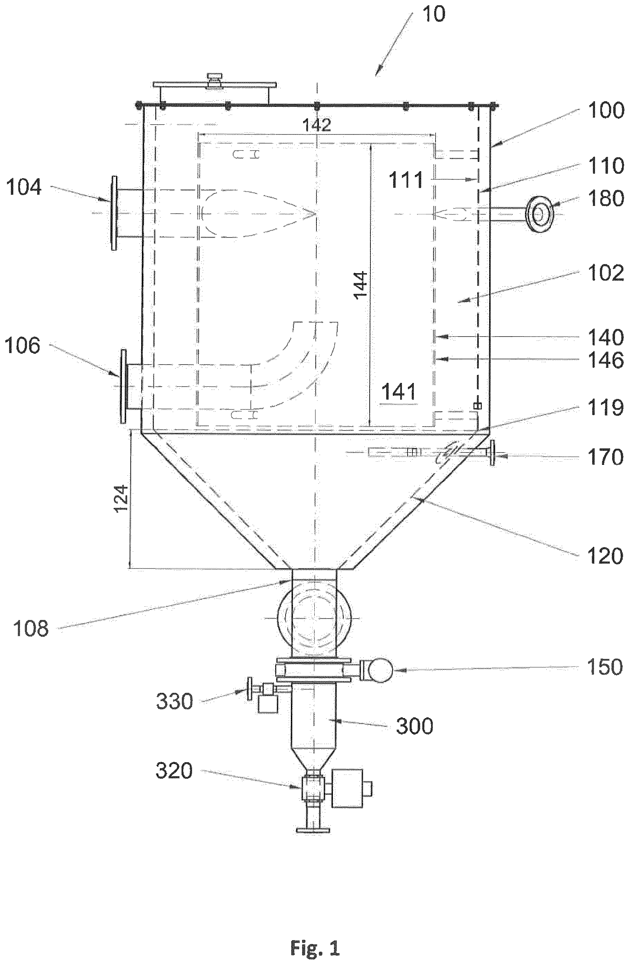

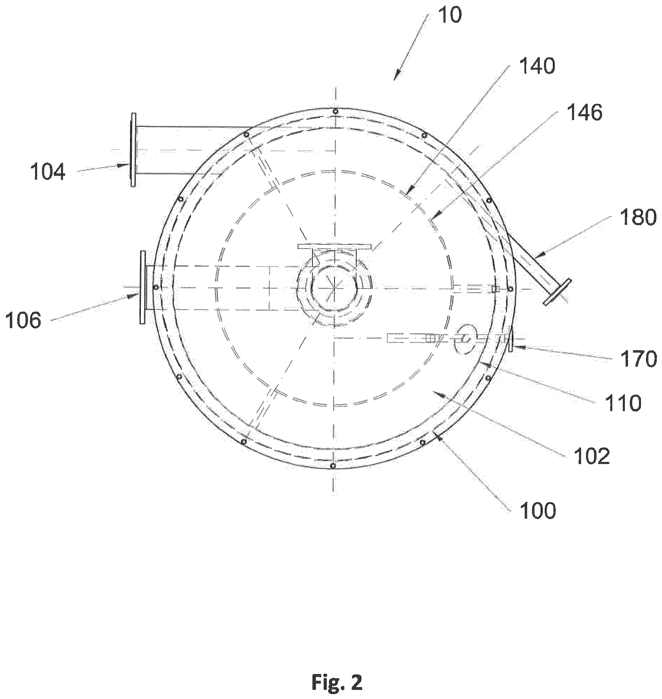

**Fig. 1** zeigt eine erste Ausführungsform einer erfindungsgemäßen Vorrichtung 10. Diese weist eine erste Kammer 100 auf, mit einem zylindrischen Bereich 110 und einem konischen Bereich 120. Der konische Bereich 120 verjüngt sich nach unten. Der zylindrische Bereich 110 bildet den oberen Teil der ersten Kammer 100; er weist eine Innenwand 111 auf, an der ein Einlass 104 angeordnet ist. Auf etwa derselben Höhe wie der zylindrische Bereich 110 ist ein Innenmantel 140 mit einer Außenwand 146 angeordnet. Der Innenmantel 140 kann auch nach oben über den zylindrischen Bereich 110 hinausragen; er kann auch nach unten in den konischen Bereich 120, zumindest teilweise, hineinragen. Durch die Innenwand 111 des zylindrischen Bereichs 110 und die Außenwand 146 des Innenmantels 140 wird ein Ringraum 102 gebildet, in den die Suspension über den Einlass 104 einströmt. Wie insbesondere in **Fig. 2** deutlich zu sehen ist, ist der Einlass 104 an der Innenwand 111 des zylindrischen Bereichs 110 im Wesentlichen tangential zu dem Innenmantel 140 angeordnet. Dieser Innenmantel 140 befindet sich innerhalb der ersten Kammer 100 und ist konzentrisch zu dieser angeordnet. Durch die mit hoher Geschwindigkeit einströmende Suspension wird mindestens in dem Ringraum 102, d.h. im Bereich zwischen der Innenwand 111 des zylindrischen Bereichs 110 und der Außenwand 146 des Innenmantels 140, eine Strömung erzeugt. Durch die Zentrifugalkraft dieser Strömung werden die Festteilchen aus der Suspension an die Innenwand 111 des zylindrischen Bereichs 110 und die Innenwand 121 des konischen Bereichs 120 gefördert. Die Festteilchen gelangen dann durch Sedimentation zum Boden 128 des konischen Bereichs 120. Dies kann noch durch einen Rüttler (nicht gezeigt) intensiviert bzw. beschleunigt werden. Am Boden 128 des konischen Bereichs 120 befindet sich der erste Auslass 106. Durch diesen können die Festteilchen abgeleitet werden.

In der gezeigten Ausführungsform ist am Boden 128 des konischen Bereichs 120 ein Ventil 150 angeordnet, das als Absperrschieber realisiert ist. Darunter ist eine Kammer 300 angeordnet. Im Betrieb ist meistens das Ventil 150 geöffnet, so dass die Festteilchen durch den ersten Auslass 106 in die Kammer 300 fallen. Wenn die Kammer 300 geleert werden soll, dann wird das Ventil 150 am oberen Ende der Kammer 300 geschlossen und das Ventil 320 am unteren Ende der Kammer 300 geöffnet. Durch diesen Mechanismus wird der Betrieb der erfindungsgemäßen Vorrichtung auch bei der Entnahme der Festteilchen aus der Kammer300 nicht gestört.

Die Kammer300 kann noch gründlicher ausgespült werden, indem Spülwasser durch den Spüleinlass 330 eingelassen wird. Für eine gründlichere Reinigung ist es auch sinnvoll, einen unteren Abschnitt der Kammer 300 in konischer Form auszuführen.

Durch den offenen Boden 148 des Innenmantels 140 gelangt die zumindest teilweise von den Festteilchen gereinigte Suspension in den Innenraum 141 des Innenmantels 140. Der Innenraum 141 des Innenmantels 140 bildet gewissermaßen eine Ruhezone innerhalb der Vorrichtung; denn in diesem Innenraum 141 herrscht nur noch eine geringe Strömung. Auf diese Weise werden auch kaum Festteilchen durch Verwirbelung in den Innenraum 141 gefördert. Die Strömung in dem Innenraum 141 kann noch weiter reduziert werden, wenn unterhalb des Innenmantels 140 eine Kammer 200 angeordnet ist. Diese Kammer 200 weist eine konische Form auf, die sich nach oben verjüngt.

An der Wand des Innenmantels 140 ist, wie insbesondere aus **Fig. 2** deutlich wird, ein zweiter Auslass 108 angeordnet. Über diesen kann die gereinigte Suspension entnommen werden. Der zweite Auslass 108 kann auch an einer anderen Stelle innerhalb des Innenraums 141 angeordnet sein. Der Auslass 108 oder ein Rohr, das mit dem Auslass 108 verbunden ist, muss auch nicht durch die Wand des Innenmantels 140 geführt werden, sondern kann auch oberhalb oder unterhalb der Kammer 200 geführt werden. Die Öffnung des Auslasses 108 kann nach oben, seitlich und/oder nach unten geöffnet sein. Je nach den Restströmungsverhältnissen in dem Innenraum 141 kann sich ein anderer Ort für den Auslass 108 als optimal erweisen.

Zusätzlich ist in dieser Ausführungsform ein Dampfeinlass 170 an der ersten Kammer 100 angeordnet. Durch den eingeleiteten Dampf kann die Suspension erhitzt werden. Dies ist vorteilhaft, weil bei vielen Suspensionen die Viskosität von der Temperatur abhängt. Durch das Einführen von Dampf, d.h. Wasserdampf oder ein anderes erhitztes Fluid, kann die Eigenschaft der Suspension in günstiger Weise verändert werden, insbesondere -je nach Bedarf - die die Viskosität der Suspension verringert oder gesteigert werden. Das eingeleitete Fluid kann bei Bedarf auch zum Abkühlen der Suspension eingesetzt werden. Ein besonderer Vorteil ergibt sich daraus, dass dadurch die Temperaturregelung der Flotte in die erfindungsgemäße Vorrichtung integriert ist und aus diesem Grund weniger externe Bauteile benötigt werden und so die Wartung verbessert wird.

Weiterhin weist die erste Kammer einen Stärkeeinlass 180 auf. Dies führt zu einer weiteren Integration bei einer erfindungsgemäßen Vorrichtung. Der Praktiker weiß, dass dies zu einer erheblichen Reduktion des Platzbedarfs und zu einer weiteren Verbesserung der Wartung führt.

### Bezugszeichenliste

- 10: Vorrichtung
- 100: erste Kammer
- 102: Ringkammer
- 104: Einlass
- 106: erster Auslass
- 108: zweiter Auslass
- 110: zylindrischer Bereich
- 111: Innenwand des zylindrischen Bereichs
- 119: Übergang zylindrischer/konischer Bereich
- 120: konischer Bereich
- 124: Höhe konischer Bereich
- 128: Boden des konischen Bereichs
- 140: Innenmantel
- 141: Innenraum des Innenmantels
- 142: Durchmesser des Innenmantels
- 144: Höhe des Innenmantels
- 146: Außenwand des Innenmantels
- 148: Boden des Innenmantels
- 150: erstes Ventil
- 170: Dampfeinlass
- 180: Stärkeeinlass
- 200: zweite Kammer
- 300: dritte Kammer (Rejektkammer)
- 308: Boden dritte Kammer
- 320: zweites Ventil
- 330: Spüleinlass

## Patentansprüche

1. Vorrichtung (10) zur Trennungvon Festteilchen aus einer Suspension oder Lösung, insbesondere zur Trennung von Asche aus einer viskosen Lösung, aufweisend:
eine erste Kammer (100), mit einem zylindrischen Bereich (110), einem konischen Bereich (120) und einem Innenmantel (140), wobei
derzylindrische Bereich (110) den oberen Teil der ersten Kammer (100) bildet und eine Innenwand (111) mit einem Einlass (104) aufweist,
der konische Bereich (120) sich nach unten verjüngt und den unteren Teil der ersten Kammer (100) bildet, eine Innenwand (121) und einen Boden (128) mit einem ersten Auslass (106) aufweist und direkt an den zylindrischen Bereich (110) anschließend angeordnet ist,
der Innenmantel (140) eine zylindrische Form hat und konzentrisch innerhalb der ersten Kammer (100), vorzugsweise im Bereich des zylindrischen Bereichs (110), angeordnet ist und
eine Außenwand (146) und einen offenen Boden (148) aufweist, und
innerhalb des Innenmantels (140) ein zweiter Auslass (108) angeordnet ist,
**dadurch gekennzeichnet, dass**
der Einlass (104) an der Innenwand (111) des zylindrischen Bereichs (110) im Wesentlichen tangential zu dem Innenmantel (140) angeordnet ist und geeignet ist, durch Einleiten der Suspension oder Lösung eine Strömung im Bereich zwischen der Innenwand (111) des zylindrischen Bereichs (110) und der Außenwand (146) des Innenmantels (140) in der Art zu erzeugen,
dass die Festteilchen aus der Suspension durch die Zentrifugalkraft der Strömung an die Innenwand (111) des zylindrischen Bereichs (110) und die Innenwand (121) des konischen Bereichs (120) gefördert werden und durch Sedimentation zum Boden (128) des konischen Bereichs (120) gelangen und über den ersten Auslass (106) ableitbar sind und
die von den Festteilchen gereinigte Suspension durch den offenen Boden (148) des Innenmantels (140) über den Innenraum des Innenmantels (140) und den zweiten Auslass (108) ableitbar ist.

2. Vorrichtung (10) nach Anspruch 1, **dadurch gekennzeichnet, dass**
der Einlass (104) und der erste Auslass (106) im oberen Drittel, vorzugsweise im oberen Viertel, des zylindrischen Bereichs (110) angeordnet sind.

3. Vorrichtung (10) nach einem der vorangehenden Ansprüche, **dadurch gekennzeichnet, dass**
die Vorrichtung (10) weiterhin eine zweite Kammer (200) aufweist, welche konisch gestaltet ist und sich nach oben verjüngt und an der Öffnung (149) im Boden (148) des Innenmantels (140) angeordnet ist.

4. Vorrichtung (10) nach einem der vorangehenden Ansprüche, **dadurch gekennzeichnet, dass**
die erste Kammer (100) weiterhin einen Dampfeinlass (170) zum Erwärmen der Suspension aufweist.

5. Vorrichtung (10) nach einem der vorangehenden Ansprüche, **dadurch gekennzeichnet, dass**
die erste Kammer (100) weiterhin einen Stärkeeinlass (180) aufweist.

6. Vorrichtung (10) nach einem der vorangehenden Ansprüche, **dadurch gekennzeichnet, dass**
derzylindrische Bereich (110) der ersten Kammer (100) einen Durchmesser (112) zwischen 100 cm und 500 cm, bevorzugt zwischen 140 cm und 200 cm,
der Innenmantel (140) einen Durchmesser (142) zwischen 50 % und 90 %, bevorzugt zwischen 70 % und 80 %, des Durchmessers (112) der ersten Kammer (100) aufweist, und
der konische Bereich (120) der ersten Kammer (100) einen unteren Durchmesser (122) zwischen 10 cm und 50 cm, bevorzugt zwischen 14 cm und 20 cm, aufweist.

7. Vorrichtung (10) nach einem der vorangehenden Ansprüche, **dadurch gekennzeichnet, dass**
derzylindrische Bereich (110) der ersten Kammer (100) eine Höhe (114) zwischen 50% und 80 %, bevorzugt zwischen 60 % und 70 %, seines Durchmessers (112) und
der Innenmantel (140) eine Höhe (144) zwischen 50% und 90 %, bevorzugt zwischen 70 % und 80%, der Höhe (114) des zylindrischen Bereichs (110) aufweist,
wobei der Boden (148) des Innenmantels (140) im Wesentlichen auf der Höhe des Übergangs (119) zwischen dem zylindrischen Bereich (110) und dem konischen Bereich (120) der ersten Kammer (100) angeordnet ist, und
der konische Bereich (120) eine Höhe (124) zwischen 10 % und 100 %, bevorzugt zwischen 20 % und 60 %, der Höhe (114) des zylindrischen Bereichs (110) aufweist.

8. Vorrichtung (10) nach einem der vorangehenden Ansprüche, **dadurch gekennzeichnet, dass**
in Strömungsrichtung vor dem Einlass (104) und/oder nach dem ersten Auslass (106) eine Pumpe angeordnet ist.

9. Vorrichtung (10) nach einem der vorangehenden Ansprüche, **dadurch gekennzeichnet, dass**
die Strömung eine Geschwindigkeit zwischen 5 km/h und 100 km/h, bevorzugt zwischen 30 km/h und 70 km/h, besonders bevorzugt von 50 km/h, aufweist.

10. Vorrichtung (10) nach einem der vorangehenden Ansprüche, **dadurch gekennzeichnet, dass**
die Vorrichtung (10) weiterhin eine, vorzugsweise zylindrische, dritte Kammer (300) aufweist, welche direkt an den Boden (128) des konischen Bereichs (120) anschließend angeordnet ist,
wobei die dritte Kammer (300) von der ersten Kammer (100) durch ein erstes Ventil (150) getrennt ist, und
die dritte Kammer (300) am Boden (308) ein zweites Ventil (320) aufweist.

11. Vorrichtung (10) nach einem der vorangehenden Ansprüche, **dadurch gekennzeichnet, dass**
die Festteilchen eine Größe von kleiner 80 µm, bevorzugt zwischen kleiner 80 µm und 8 µm, besonders bevorzugt zwischen 50 µm und 5 µm, und
ein spezifisches Gewicht von größer 1,1 kg/dm³, bevorzugt zwischen 1,2 kg/dm³ und 5,0 kg/dm³, besonders bevorzugt zwischen 2,0 kg/dm³ und 2,5 kg/dm³, aufweisen.

12. Vorrichtung (10) nach einem der vorangehenden Ansprüche, **dadurch gekennzeichnet, dass**
die Vorrichtung (10) weiterhin einen Rüttler zur stoßweisen vertikalen Bewegung der ersten Kammer (100) aufweist.
